(19) Europäisches Patentamt
European Patent Office
Office européen des brevets

(11) **EP 4 263 037 B1**

(12) **FASCICULE DE BREVET EUROPEEN**

(45) Date de publication et mention
de la délivrance du brevet:
**30.10.2024 Bulletin 2024/44**

(21) Numéro de dépôt: **21778162.4**

(22) Date de dépôt: **24.09.2021**

(51) Classification Internationale des Brevets (IPC):
**B01J 2/02** *(2006.01)*    **B07B 7/08** *(2006.01)*
**G01N 15/10** *(2024.01)*

(52) Classification Coopérative des Brevets (CPC):
**B01J 2/02; B07B 7/08; G01N 15/10;**
G01N 2015/0288; G01N 2015/1028;
G01N 2015/1029

(86) Numéro de dépôt international:
**PCT/EP2021/076333**

(87) Numéro de publication internationale:
**WO 2022/135756 (30.06.2022 Gazette 2022/26)**

(54) **MODULE DESTINÉ À ÊTRE EMPLOYÉ DANS UN SYSTÈME DE TRI PAR TAILLE DE PARTICULES EXPULSÉES PAR CENTRIFUGATION, SYSTÈME DE TRI ET PROCÉDÉ DE CONFIGURATION D'UN TEL SYSTÈME**

MODUL ZUR VERWENDUNG IN EINEM SYSTEM ZUR GRÖSSENSORTIERUNG VON ZENTRIFUGAL AUSGESTOSSENEN PARTIKELN, SORTIERSYSTEM UND VERFAHREN ZUR KONFIGURATION EINES SOLCHEN SYSTEMS

MODULE FOR USE IN A SYSTEM FOR SORTING CENTRIFUGALLY EXPELLED PARTICLES ACCORDING TO SIZE, SORTING SYSTEM AND METHOD FOR CONFIGURING SUCH A SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2020 FR 2013809**

(43) Date de publication de la demande:
**25.10.2023 Bulletin 2023/43**

(73) Titulaire: **Commissariat à l'Energie Atomique et aux Energies Alternatives
75015 Paris (FR)**

(72) Inventeurs:
• **BOTTAUSCI, Frédéric**
  **38054 GRENOBLE Cedex 09 (FR)**
• **ACHARD, Jean-Luc**
  **38054 GRENOBLE Cedex 09 (FR)**
• **BADALAN, Matei**
  **38054 GRENOBLE Cedex 09 (FR)**

(74) Mandataire: **INNOV-GROUP
209 Avenue Berthelot
69007 Lyon (FR)**

(56) Documents cités:
**FR-A1- 2 501 061    US-A- 2 734 631**

**Description**

**Domaine technique de l'invention**

La présente invention se rapporte à un module destiné à être employé dans un système de tri par taille de particules expulsées par centrifugation, à un système de tri intégrant ledit module et à un procédé de configuration d'un tel système.

**Etat de la technique**

Différents systèmes ont déjà été proposés antérieurement pour trier des particules par taille ou gamme de tailles, notamment pour séparer des particules ou gouttes d'intérêt. Certains systèmes utilisent le principe de centrifugation, en créant un cyclone dans une enceinte fermée. La demande de brevet US2012/302420A1 décrit ce type de système. De nombreux autres brevets décrivent des solutions basées sur le même principe.

Il existe aussi des brevets et publications qui traitent du tri d'amas de cellules en vue de réaliser leur encapsulation. C'est le cas par exemple dans la demande de brevet US2009/286300A1. Cette dernière demande de brevet cite par ailleurs différentes techniques de tri déjà connues et décrites dans des documents antérieurs. Parmi elles, on peut citer celle reposant sur un tri par déplacement latéral déterministe (appelé "DLD"), comme décrit dans les demandes de brevets WO2004/037374A1, US2007/059781 et US2007/026381A1. Il existe aussi le tri par filtration hydrodynamique (demandes de brevets JP2007 021465 par exemple), le tri par taille en utilisant les lignes d'écoulement comme dans la demande de brevet WO2006/102258A1 et le tri par filtration comme décrit dans la demande de brevet US2005/133480A1.

Tous ces systèmes antérieurs ne permettent pas de produire les particules et de les trier dans un même système.

La demande de brevet FR2501061A1 décrit un appareil destiné à produire des particules sous forme gélifiée. Cet appareil permet de réaliser un jet annulaire par rotation d'un rotor. L'atomiseur centrifuge génère des particules pouvant être triées par tailles, en plaçant des parois pour former plusieurs compartiments.

Cette solution antérieure nécessite une installation complexe dans laquelle les particules à gélifier doivent être acheminées jusqu'à l'atomiseur centrifuge. De plus, elle n'est pas facilement transportable, la rendant peu autonome.

Le but de l'invention est notamment de proposer un module utilisable dans un système de tri de particules, qui permet de facilement produire des particules et d'obtenir in fine un tri sélectif de ces particules de manière simple et fiable, au sein dudit système.

Un autre but de l'invention est de proposer un système de tri de particules par taille, intégrant ledit module.

Un autre but de l'invention est également de proposer un procédé destiné à être appliqué à un tel système de tri pour faciliter sa configuration.

**Exposé de l'invention**

Ce but est atteint par un module destiné à être employé dans un système de tri de particules par taille, ledit module se présentant sous la forme d'un élément monobloc portant :

- Une unité de production comportant un réservoir de liquide et une buse d'expulsion montée sur ledit réservoir, par laquelle des particules peuvent être expulsées par centrifugation,
- Une unité de collecte et de séparation positionnée en vis-à-vis de ladite buse d'expulsion, ladite unité de collecte et de séparation comprenant au moins une paroi de séparation agencée pour former au moins deux compartiments distincts, destinés à collecter des particules d'au moins une première taille dans un premier compartiment et des particules d'une deuxième taille dans un deuxième compartiment,
- L'unité de production et l'unité de collecte et de séparation étant agencés fixes l'une par rapport à l'autre lors d'un tri de particules.

Selon un aspect de l'invention, le module est amovible et peut facilement être remplacé au sein de la centrifugeuse du système. Il est facilement adaptable sur la centrifugeuse du système pour réaliser le tri des particules. Actionné par la centrifugeuse, il est totalement autonome en ce qui concerne la production des particules et la collecte et le tri des particules. Il n'est aucunement nécessaire de le relier à un réservoir externe. Le module logeant l'unité de production et l'unité de collecte et de séparation peut être entièrement scellée, et ainsi facilement manipulable et transportable.

Selon une particularité, le module comporte des moyens de réglage d'une position de ladite au moins une paroi de séparation de ladite unité de collecte et de séparation, pour laquelle lesdites particules de la première taille sont séparées des particules de la deuxième taille.

Selon une autre particularité, les moyens de réglage sont actionnés manuellement ou de manière automatique par commande en provenance d'une unité de traitement et de commande, en tenant compte d'une position calculée.

Selon une autre particularité, les moyens de réglage comportent des moyens de déplacement de ladite au moins une paroi de séparation de ladite unité de collecte et de séparation dans au moins deux directions appartenant à un plan, dit plan de réglage, qui est perpendiculaire audit premier axe.

Selon une autre particularité, l'unité de collecte et de séparation comporte au moins un tube de réception.

Le tube de réception peut notamment être rempli d'un liquide de sorte que les particules sont expulsées de la buse directement dans ce liquide. En variante, on pourrait utiliser de l'air. On verra ci-après que la nature du fluide joue un rôle dans le tri qui est effectué.

Selon une autre particularité, ledit tube de réception comporte ladite au moins une paroi de séparation dont la position est réglée à l'aide desdits moyens de réglage.

Selon une autre particularité, le tube de réception est cylindrique.

Selon une autre particularité, ladite au moins une paroi de séparation est celle d'un réservoir inséré dans ledit tube.

Selon une autre particularité, le tube de réception intègre plusieurs parois de séparation afin de former au moins trois compartiments de tri.

Selon une autre particularité, la buse d'expulsion est formée à la sortie d'un capillaire relié audit réservoir.

L'invention concerne également un système de tri par taille, de particules expulsées par centrifugation au sein d'un fluide, ledit système comportant :

- Une centrifugeuse,
- Au moins un module tel que défini ci-dessus, monté sur la centrifugeuse et actionnable en rotation autour d'un premier axe par ladite centrifugeuse, ce premier axe étant l'axe de rotation de la centrifugeuse.

L'invention concerne également un procédé de configuration destiné à être appliqué à un système de tri de particules expulsées par centrifugation au sein d'un fluide depuis une buse d'expulsion dudit système, ledit système étant tel que défini ci-dessus, ledit procédé consistant à :

- Déterminer pour plusieurs tailles distinctes de particules destinées à être expulsées, une trajectoire théorique depuis la buse d'expulsion à partir d'une équation de mouvement de la particule, cette équation de mouvement tenant compte au moins de la force centrifuge, de la force de Coriolis et de la force de trainée venant s'appliquer sur chaque particule après expulsion par centrifugation,
- Positionner au moins une paroi de séparation d'une unité de collecte et de séparation en vis-à-vis de ladite buse d'expulsion, ladite au moins une paroi de séparation étant agencée pour former au moins deux compartiments distincts et positionnée en tenant compte des trajectoires des particules expulsées déterminées, pour collecter des particules d'au moins une première taille dans un premier compartiment et des particules d'une deuxième taille dans un deuxième compartiment.

**Brève description des figures**

D'autres caractéristiques et avantages vont apparaître dans la description détaillée qui suit faite en regard des dessins annexés dans lesquels :

- La figure 1 représente de manière schématique le principe du système de tri de particules conforme à l'invention ;
- La figure 2 montre une simulation de trajectoires de gouttes de tailles différentes produites en sortie d'un capillaire et expulsées dans l'air par centrifugation ;
- La figure 3 montre une séquence d'images illustrant les différentes phases de formation de gouttes en sortie d'un capillaire par gravité ; Cette séquence d'images est issue de la publication *"Villermaux, Pistre et Lhuissier 2013"* ;
- La figure 4 montre la trajectoire d'une goutte expulsée par centrifugation et met en évidence les différents paramètres pertinents de sa trajectoire ;
- La figure 5 montre les différentes forces exercées sur une goutte expulsée par centrifugation (en négligeant la gravité terrestre) ;
- La figure 6 correspond à la figure 1, sur laquelle a été ajouté un réservoir de collecte, afin d'illustrer le principe de réglage de la position de ce réservoir par rapport à la sortie du capillaire ;
- La figure 7 représente un exemple de réalisation du système de tri de particules conforme à l'invention et illustre le principe de configuration de ce système ;
- La figure 8 montre l'unité de collecte du système, suivant une vue en coupe transversale selon A-A ;
- La figure 9A, la figure 9B et la figure 9C montrent, par des vues en coupe, différentes variantes de réalisation de l'unité de collecte du système de tri de l'invention ;

**Description détaillée d'au moins un mode de réalisation**

L'invention vise la récupération sélective de particules P expulsées par force centrifuge, par un dispositif d'expulsion appartenant à un système de tri.

Dans la suite de la description, par particules P, on entend par exemple et de manière non limitative, des poussières, des gouttes, des virus, des cellules, des micro-organismes,...

Dans le cas de particules de type gouttes (référencées G sur les figures annexées), le système est configuré pour à la fois produire les gouttes et pour les trier en une seule mise en oeuvre.

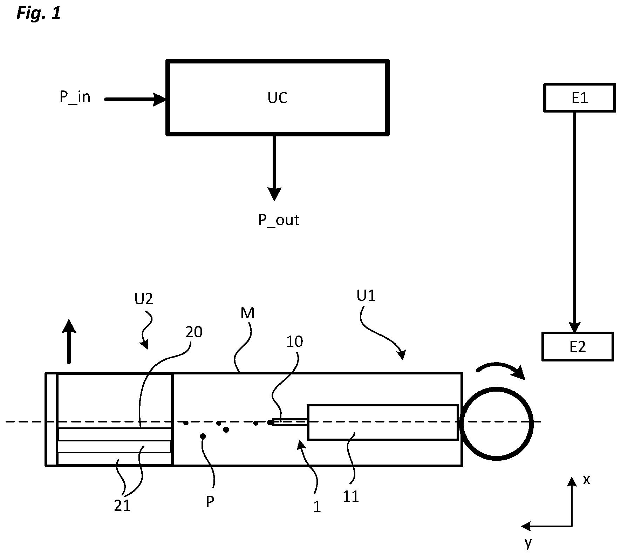

En référence à la figure 1, de manière générale, le système de tri de particules P conforme à l'invention comporte principalement :

- Une centrifugeuse ;
- Un module M monté sur la centrifugeuse et actionnable en rotation par la centrifugeuse ;
- Une unité de production U1 portée par le module ;
- Une unité de collecte et de séparation U2 également portée par le module ;

Selon un aspect particulier de l'invention, le module M est formé d'un élément monobloc qui porte en effet l'unité de production U1 et l'unité de collecte et de séparation U2, de sorte que ces deux unités sont fixes l'une par rapport à l'autre lorsque le tri est réalisé dans la centrifugeuse.

Le module M portant l'unité de production U1 et l'unité de collecte et de séparation U2 est mis en rotation par la centrifugeuse du système, autour d'un axe, dit axe de centrifugation. Cet axe est parallèle à un axe z du repère x-y-z et perpendiculaire au plan x-y. En régime de croisière, la vitesse de rotation (référencée ω) est choisie constante. Les deux unités U1, U2 sont donc entraînées en rotation de manière solidaire, donc à la même vitesse. Elles ont donc toujours la même position l'une par rapport à l'autre lors du tri des particules.

Selon un autre aspect de l'invention, le module M est amovible et peut facilement être remplacé au sein de la centrifugeuse. Il est totalement autonome en ce qui concerne la production des particules P et la collecte des particules P. Il n'est aucunement nécessaire de le relier à un réservoir externe.

L'unité de production U1 comporte un dispositif d'expulsion 1 chargé d'expulser les particules P par centrifugation à travers une buse d'expulsion 10. Les particules peuvent être stockées dans un réservoir 11 du dispositif 1. Dans le cas de gouttes, le dispositif d'expulsion 1 comporte un réservoir 11 de liquide et un capillaire 100 relié audit réservoir 11. Le liquide stocké dans le réservoir 11, soumis à la force centrifuge, se trouve expulsé sous forme de gouttes à travers la buse d'expulsion 10. Par centrifugation, les gouttes se détachent du capillaire 100 et sont expulsées (dans l'air ou dans un autre fluide), dans leur grande majorité, dans un plan x-y (voir explications ci-après).

L'unité de collecte et de séparation U2 permet une séparation des particules d'intérêt parmi l'ensemble des particules P expulsées en provenance de la buse 10. Cette séparation peut être mise en oeuvre en positionnant au moins une paroi de séparation 20 de manière adaptée, en fonction des trajectoires des particules P de tailles différentes, ces trajectoires pouvant être déterminées préalablement lors d'une phase de configuration du système. Sur la figure 1, l'unité de collecte et de séparation U2 comporte ainsi plusieurs compartiments 21 destinés chacun à récolter des particules P ayant un diamètre compris dans une gamme de tailles déterminée. Si les particules sont expulsées dans le plan x-y, les parois de séparation seront préférentiellement agencées dans un plan perpendiculaire au plan x-y. Bien entendu, on verra qu'une paroi peut prendre différentes configurations (réservoir) et donc différentes formes.

De manière avantageuse, le système de tri peut comporter des moyens de réglage de la position de l'unité de collecte et de séparation U2 en vue de cibler les particules d'intérêt. Ces moyens de réglage peuvent être manuels ou actionnés automatiquement, par exemple par une commande en provenance d'une unité de traitement et de commande UC, suite à la détermination d'une position adaptée. Ces moyens de réglage sont par exemple configurés pour adapter la position de chaque paroi de séparation 20 de l'unité de collecte et de séparation U2.

Les moyens de réglage permettent avantageusement d'ajuster la position de l'unité de collecte et de séparation U2 dans les deux directions du plan x-y, et donc de positionner chaque paroi de séparation 20 de manière adaptée par rapport à la buse d'expulsion 10.

Selon un aspect particulier de l'invention, la configuration de ce système de tri est avantageusement réalisée en déterminant au préalable les trajectoires des particules P. Pour cela, l'unité de traitement et de commande UC peut être employée. L'unité de traitement et de commande UC est chargée d'exécuter un ou plusieurs modules logiciels de configuration.

En référence à la figure 1, lors d'une première étape E1, à partir de paramètres d'entrée P_in, l'unité de traitement et de commande UC est configurée pour déterminer la trajectoire des particules P de plusieurs tailles lorsqu'elles sont expulsées dans un fluide (par exemple l'air) par centrifugation et d'obtenir des paramètres de sortie P_out nécessaires au réglage de l'unité de collecte et de séparation U2. Ces paramètres de réglage peuvent être employés, lors d'une deuxième étape E2, pour régler l'unité de collecte et de séparation U2 en vue de séparer les particules d'intérêt parmi l'ensemble des particules expulsées.

Lors de l'étape E1, l'unité de traitement et de commande UC peut recevoir en entrée les paramètres d'entrée P_in suivants :

- Le diamètre de la particule ;
- La masse volumique du matériau de la particule ;
- La vitesse de rotation $\vec{\omega}$ de l'unité de production ;
- La nature du matériau formant les particules (s'il s'agit d'un liquide : la viscosité) ;
- L'aspect des particules (en distinguant les cas des gouttes, des particules solides et des particules biologiques) ;
- La nature du fluide (viscosité, masse volumique) environnant présent entre la buse d'expulsion 10 et l'unité de collecte et de séparation U2 ;
- La géométrie du système (notamment position de la sortie de la buse d'expulsion 10) ;

L'unité de traitement et de commande UC détermine les trajectoires des particules P, selon leur taille.

Partant de ces principes, une fois que les trajectoires des particules de plusieurs tailles distinctes sont déterminées par l'unité de traitement et de commande UC, il est possible de régler la position de l'unité de collecte et de séparation U2 par rapport à la buse d'expulsion 10 en vue de collecter des particules d'au moins une taille cible ou gamme de tailles, parmi des particules de plusieurs tailles distinctes, expulsées de la buse 10. Bien entendu, pour calculer la trajectoire de la particule, il est nécessaire de connaître la position absolue de la sortie de la buse d'expulsion 10 dans le repère tournant. Celle-ci est fixée avant les calculs. Ensuite les moyens de réglage permettent d'ajuster les positions des parois 20, en fonction des trajectoires calculées. Rien n'empêche d'avoir une position réglable de la buse 10, mais il faut juste que sa position soit connue pour pouvoir effectuer les calculs de trajectoire.

L'unité de traitement et de commande UC peut être configurée pour déterminer automatiquement la position que chaque paroi 20 de séparation doit adopter pour collecter les particules d'intérêt d'une taille cible ou d'une gamme de tailles cible dans un compartiment 21 donné de l'unité U2. Cette taille ou gamme de tailles peut être un paramètre d'entrée de l'unité de traitement et de commande UC.

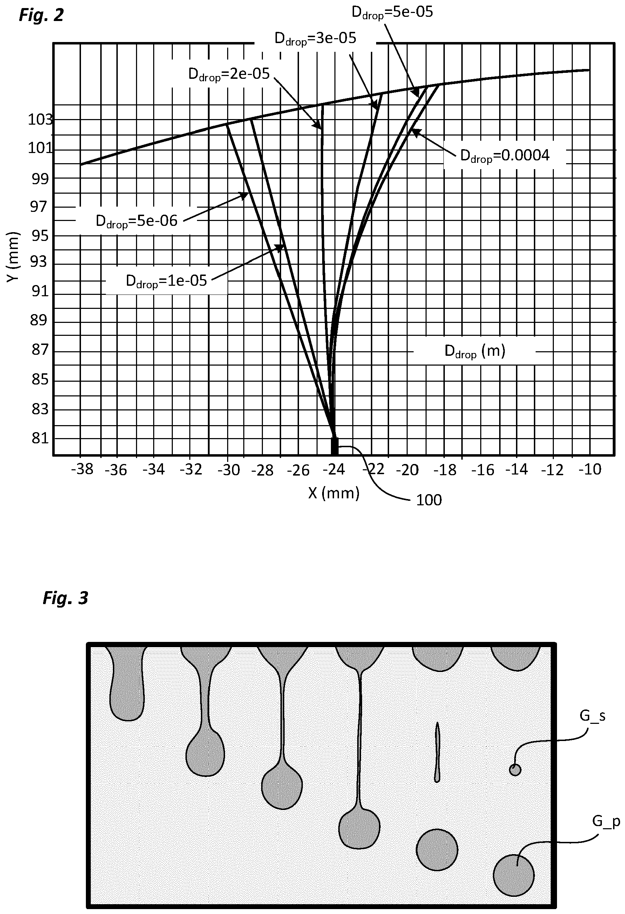

La figure 2 illustre par une simulation la trajectoire de gouttes G d'un même matériau et de différentes tailles générées en sortie d'un capillaire 100 (formant la buse d'expulsion 10) par force centrifuge. Cette simulation permet de constater que la trajectoire des gouttes G varie en fonction de la taille des gouttes produites. Le fluide composant les gouttes s'écoule dans le capillaire 100, sous l'effet de la force centrifuge. En liaison avec la figure 3, on peut voir qu'à l'extrémité du capillaire, une goutte se forme et va se détacher lorsqu'elle atteint une taille critique. Lors du détachement, un filament peut se former, reliant un instant la goutte G au capillaire 100. Ce filament peut se scinder en plusieurs sections, donnant naissance à ce que l'on appelle des gouttes satellites G_s, ayant une taille inférieure à la goutte principale G_p qui s'est détachée.

Toutes les gouttes G expulsées de la buse d'expulsion 10 sont soumises principalement à trois forces (la force de gravité étant considérée comme négligeable) :

- La force centrifuge,
- La force de Coriolis, et
- La force de traînée.

Ces forces imposent aux gouttes G une trajectoire qui dépend de leur masse et donc de leur taille lorsque les particules présentent des densités similaires. Ainsi, les petites gouttes (gouttes G_s sur la figure 3) ont une trajectoire plus rectiligne à la sortie de la buse que celles de tailles plus importantes (gouttes G_p sur la figure 3).

Selon un aspect particulier de l'invention, on a constaté que la nature du fluide dans lequel les gouttes G sont expulsées joue un rôle dans les forces mises en jeu et agissant sur les gouttes G après expulsion. Autrement dit, lorsque les gouttes G sont expulsées dans l'air le mouvement des gouttes est gouverné principalement par la force centrifuge et la force de Coriolis, et lorsque les gouttes G sont expulsées dans un liquide, la force de trainée joue un rôle plus important, notamment sur les gouttes de plus grosses tailles (typiquement d'un diamètre supérieur à quelques centaines de $\mu$m). Dans ce dernier cas, la trajectoire des gouttes G est alors plus fortement dépendante de la taille des gouttes.

Seule la trajectoire de la goutte G après détachement du capillaire 100 est importante et donc prise en compte dans l'analyse.

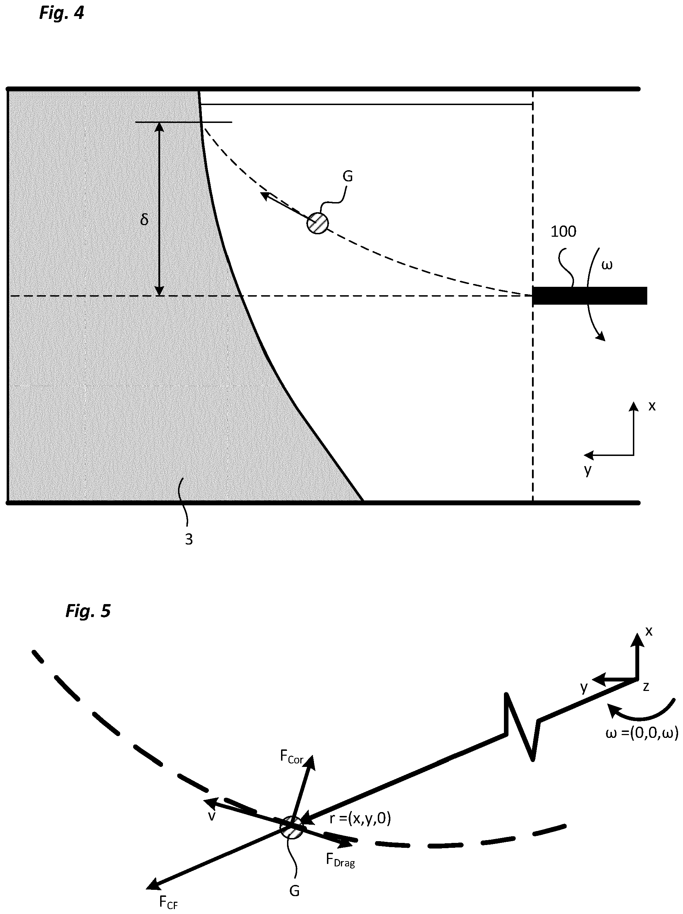

La figure 4 montre de manière schématique la trajectoire d'une goutte G produite en sortie du capillaire 100 et venant s'impacter contre un milieu liquide 3. On peut voir que la goutte se détache du capillaire. Sa vitesse augmente durant son temps de vol avant d'impacter l'interface avec le milieu liquide 3. La trajectoire n'est pas rectiligne car le système est en rotation. La goutte G est ainsi déviée de $\delta$ par rapport à l'axe du capillaire 100.

La figure 5 montre de manière détaillée les différentes forces qui s'exercent sur une goutte G après expulsion du capillaire 100.

Dans le repère tournant, en négligeant la gravité terrestre, l'équation du mouvement de la goutte G est ainsi la suivante :

$$m\frac{d\vec{v}}{dt} = \vec{F}_{CF} + \vec{F}_{Cor} + \vec{F}_{Drag}$$

Avec :

La force centrifuge : $\vec{F}_{CF} = -(\rho_{drop} - \rho_{air})V_{drop}\vec{\omega} \times (\vec{\omega} \times \vec{r})$

La force de Coriolis : $\vec{F}_{Cor} = -2\rho_{drop}V_{drop}\vec{\omega} \times \vec{v}$

La force de trainée :

$$\vec{F}_{Drag} = -\frac{1}{2}C_D\rho_{air}|\vec{v}|^2 A_{drop} \cdot \frac{\vec{v}}{|\vec{v}|}$$

Avec le symbole « $\times$ » définissant le produit vectoriel et avec : $C_D = \frac{1}{1+\mu_r}\left[\mu_r\left(\frac{24}{Re} + \frac{4}{Re^{1/3}}\right) + \frac{14.9}{Re^{0.78}}\right]$ qui correspond au coefficient de trainée pour une goutte (référence *Rivkind* & *Ryskin*) ;
Pour $0.5 \le Re \le 200$

Dans lesquelles ;

$\rho_{drop}$ et $\rho_{air}$ correspondent respectivement à la masse volumique du matériau de la goutte et à la masse volumique de l'air ;
$V_{drop}$ correspond au volume de la goutte ;
$A_{drop}$ correspond au maitre couple de la sphère formée par la goutte, avançant dans un fluide ;
Re correspond au nombre de Reynolds ;
$\vec{v}$ correspond au vecteur vitesse de la goutte ;
$\vec{\omega}$ correspond au vecteur vitesse de rotation de l'unité de centrifugation :

$$\vec{\omega} = (0,0,\omega)$$

$\mu_r$ correspond à la viscosité relative d'une goutte :

$\mu_r = \mu_{drop}/\mu_{air}$

$\vec{r}$ correspond au vecteur de position de la goutte, ayant pour coordonnées :

$$\vec{r} = (x, y, 0)$$

Pour rappel, le nombre de Reynolds Re d'une particule en vol est déterminé à partir de la relation suivante :

$$Re = \frac{\rho_{drop} D_{drop} U_{drop}}{\mu_{air}}$$

Il faut noter que le choix de la relation à utiliser pour le coefficient de traînée $C_D$ est déterminé par la viscosité de la goutte, par le rapport d'aspect de la goutte (les relations ci-dessus sont valables pour des sphères) et par la présence en surface d'éventuels contaminants (susceptible de produire l'effet Marangoni).

Si la particule est solide, le coefficient de trainée devra être adapté (par exemple selon la relation de *Kelbaliyev* & *Ceylan*).

Pour déterminer la trajectoire d'une goutte G selon l'équation de mouvement reprise ci-dessus, il est préférable de simplifier le calcul. Ainsi, pour simplifier ce calcul, on peut adopter trois hypothèses de départ :

- La première hypothèse est que les gouttes G ont une vitesse initiale nulle lors du détachement du capillaire 100 :

$$\vec{v}_0 = 0$$

- La seconde hypothèse consiste à ne pas prendre en compte la déformation de la goutte G lors de son déplacement. La goutte est ainsi considérée comme une sphère rigide.

$$V_{drop} = \frac{\pi D_{drop}^3}{6}$$

$$A_{drop} = \frac{\pi D_{drop}^2}{4}$$

Avec :

$V_{drop}$ qui correspond au volume de la sphère formée par la goutte :

$A_{drop}$ qui correspond au maitre couple de la sphère formée par la goutte, avançant dans un fluide ;

$D_{drop}$ qui correspond au diamètre de la sphère formée par la goutte ;

- La dernière hypothèse consiste à considérer que le mouvement de l'ensemble des gouttes G se situe dans un plan horizontal (plan x-y).

Cette dernière hypothèse nécessite trois sous-hypothèses :

- Comme la gravité terrestre est nettement inférieure à la force centrifuge (qui peut prendre, par exemple, des valeurs de plusieurs centaines de « g », voire quelques milliers), on admet que le mouvement vertical (direction z) de la goutte G est négligeable devant le mouvement dans le plan horizontal (plan x-y).
- On ne prend pas en compte les éventuelles interactions entre les gouttes principales G_p et les gouttes satellites G_s, une fois celles-ci formées à partir des filaments en sortie du capillaire 100. En réalité, ces interactions peuvent induire des déviations qui ne persistent pas forcement dans le plan x-y. Ces interactions se produisent essentiellement et inévitablement au tout début de leur vol respectif. Or, le moindre écart de la trajectoire d'une goutte satellite G_s par rapport à ce plan pourrait se trouver amplifié à la suite de ces interactions.
- Dernière sous-hypothèse qui est la plus contraignante et qui affecte les gouttes satellites G_s lors de leur formation : ces dernières résultent de la rupture du filament inter gouttes, rupture qui a forcément un caractère aléatoire surtout dans les conditions de non axisymétrie de ce processus dans notre système. On admet ainsi que lors de la génération d'une goutte, cette rupture n'induit pas des vitesses initiales de gouttes en dehors du plan x-y.

La résolution de l'équation de mouvement définie ci-dessus permet ainsi de déterminer la trajectoire de chaque goutte G, en tenant compte de :

- sa taille (c'est-à-dire son diamètre $D_{drop}$) ;
- sa masse volumique $\rho_{drop}$ ;
- la vitesse de rotation $\vec{\omega}$ de l'unité de centrifugation ;
- La nature du matériau formant les gouttes ;
- La nature du fluide (viscosité, masse volumique) présent entre la buse d'expulsion 10 et l'unité de collecte et de séparation U2 ;
- La géométrie du système (positionnement de la sortie du capillaire dans le plan x-y), diamètre du capillaire, longueur du capillaire, débit à l'entrée du capillaire ;

Ces paramètres forment les paramètres d'entrée P_in précités.

Les simulations ont également permis de démontrer que la vitesse de rotation $\vec{\omega}$ de l'unité de centrifugation n'impacte pas la trajectoire des gouttes, lorsque les gouttes ont une taille importante. Il faut cependant noter que la vitesse de rotation de l'unité de centrifugation U1 pourra être adaptée, par exemple en tenant compte de la viscosité du liquide destiné à former les gouttes.

En revenant sur la figure 2, on constate que, pour une vitesse fixée, la trajectoire des gouttes G varie en fonction de leur taille. La trajectoire de la goutte est notamment impactée par la force de trainée $\vec{F}_{Drag}$. Les gouttes qui disposent d'une taille supérieure à 100μm présentent des trajectoires similaires. Pour les gouttes qui disposent d'une taille inférieure à 50μm de diamètre, on distingue plusieurs trajectoires distinctes. Par ailleurs, la séparation en taille est aussi proportionnelle à la distance suivant la direction y (distance depuis la sortie du capillaire). Plus l'unité de collecte sera éloignée de la sortie du capillaire, plus la granulométrie des gouttes, et en particulier celles de petites tailles, sera étalée.

Les principes développés ci-dessus sont transposables à toute particule expulsée d'une buse 10 par centrifugation.

A titre d'exemple, une des applications peut être également le tri de capsules déjà formées. Pour cela un volume de capsules déjà formées est injecté dans le réservoir du capillaire 100. Par force centrifuge elles passent dans le capillaire 100 et sont ensuite triées suivant leur granulométrie dans les différents réservoirs.

Il est ainsi possible de configurer un système de tri de manière adaptée pour séparer des particules d'intérêt d'un ensemble de particules expulsées par centrifugation.

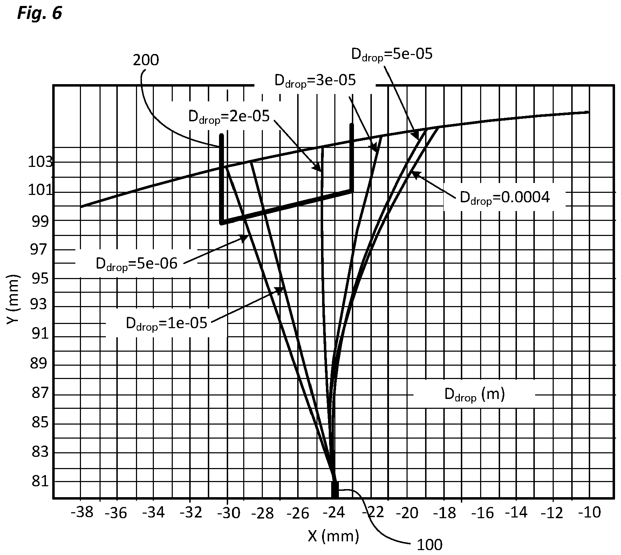

La figure 6 illustre ce principe pour les gouttes G, en liaison avec la simulation de la figure 2 déjà décrite ci-dessus. Un réservoir 200 de l'unité de collecte et de séparation U2 est positionné pour récolter les gouttes G ayant une taille inférieure à 20μm uniquement, les gouttes de diamètre supérieur ne sont pas captées par ce réservoir.

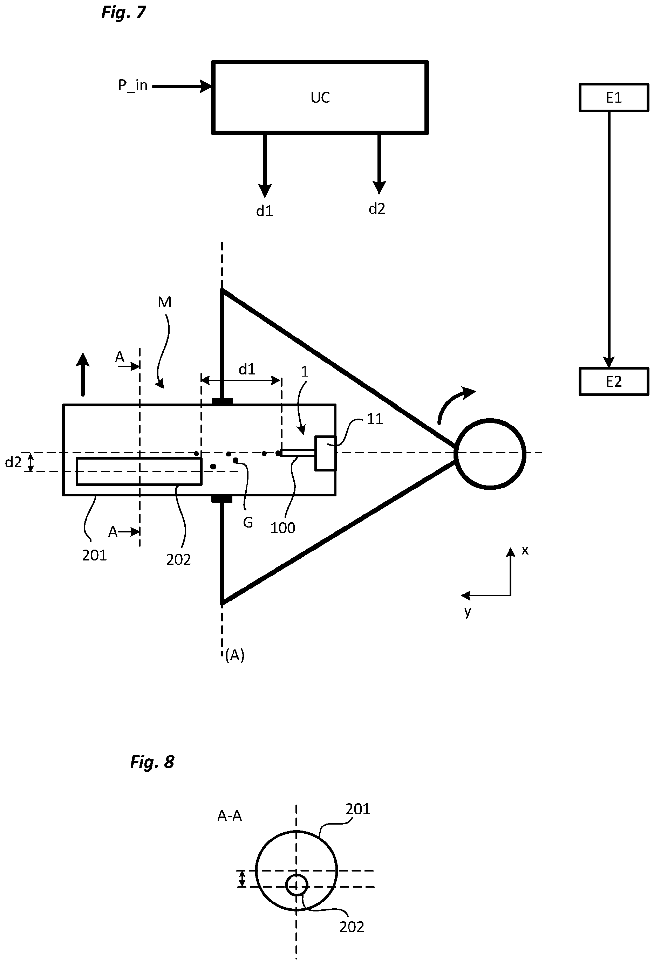

La figure 7 et la figure 8 montrent également un exemple de réalisation du système de tri conforme à l'invention, destiné à la séparation de gouttes G d'intérêt.

Sur la figure 7, l'unité de collecte et de séparation U2 comporte un tube 201 et un réservoir 202 imbriqués l'un dans l'autre, le tube 201 étant situé à l'extérieur, pour collecter des gouttes d'une première gamme de tailles, et le réservoir 202 intégré dans le tube 201 pour collecter des gouttes d'une deuxième gamme de tailles, distincte de la première gamme de tailles. La position relative du tube et du réservoir et la taille du réservoir permettent de sélectionner certaines gouttes parmi l'ensemble des gouttes expulsées. Pour simplifier, le tube 201 et le réservoir 202 peuvent être formées chacun par un cylindre de révolution. La paroi du réservoir 202 forme ainsi une paroi de séparation 20 telle que décrite ci-dessus et le volume interne du tube 201 et celui du réservoir 202, deux compartiments 21 de collecte.

Dans ce mode de réalisation de la figure 7, la buse d'expulsion 10 est solidaire de l'unité de collecte et de séparation U2, formant ainsi le module M entraîné en rotation autour de l'axe de centrifugation (parallèle à l'axe z). De manière non limitative, le module M peut également être monté en pivotement autour d'un axe (A) perpendiculaire à l'axe de rotation de centrifugation et situé dans le plan x-y.

Pour la production des gouttes G, la buse d'expulsion est formée à l'extrémité d'un capillaire 100 connecté sur l'unité de collecte et de séparation U2. Dans le plan x-y, l'axe du tube 201 est situé dans l'axe du capillaire et l'axe du réservoir 202 est désaxé par rapport à l'axe du capillaire 100, d'une distance d2. Le réservoir 202 et le tube 201 ne sont donc pas coaxiaux. La position de l'entrée du réservoir 202 est également choisie à une distance d1 de la sortie du capillaire. Ces deux paramètres d1, d2 peuvent être ajustées selon la trajectoire des gouttes G. Ils font par exemple partie des paramètres de sortie P_out calculés par l'unité de traitement et de commande UC et permettent ainsi d'ajuster la position de la paroi de séparation 20.

Comme illustré par la figure 3 précitée, la rotation du capillaire 100 permet la formation de gouttes à sa sortie par centrifugation. Des gouttes de tailles différentes sont produites.

De manière non limitative, le capillaire 100 peut présenter une longueur déterminée et un diamètre interne déterminé connecté à un microréservoir de fluide utilisé pour la génération des gouttes G. Un support est employé pour venir fixer l'ensemble microréservoir-capillaire sur le tube 201. Le support est ajusté pour pénétrer en partie dans le tube 201 externe et permet un réglage de la distance de la sortie du capillaire 100 par rapport au fond du tube 201, par exemple sur une plage de réglage de 6mm.

Le réservoir 202 intégré au tube 201 peut présenter un diamètre de 16mm et une hauteur comprise entre 5 et 10cm. La paroi du réservoir 202 doit être la plus fine possible afin d'avoir une frontière de séparation précise. Ce réservoir 202 est par exemple collé sur la paroi interne du tube 201 de telle sorte que la frontière soit à une distance (hauteur) modifiable (=d1), comprise entre 5mm et 20mm, de la sortie du capillaire 100.

A titre d'exemple, le réservoir 202 et le tube 201 peuvent être par exemple remplis avec un bain gélifiant. Dans cette configuration les gouttes satellites seront collectées dans le fond du réservoir et les gouttes principales dans le fond du tube.

L'unité de centrifugation peut comporter une centrifugeuse de laboratoire munie par exemple de plusieurs modules M montés mobiles en pivotement autour de l'axe (A) et configurés pour recevoir plusieurs unités de collecte et de séparation U2 du type de l'invention, intégrant chacune un dispositif d'expulsion 1 (buse + réservoir de particules). Lors de mise en rotation, les modules M pivotent jusqu'à l'horizontale, pour placer l'axe du tube et de la buse d'expulsion dans le plan x-y. Il serait également possible de prévoir un système fixe, orientée dans le plan x-y ou faisant un angle déterminé avec ce plan (inférieur à 90°).

Les modules M sont tous indépendants et amovibles par rapport à la centrifugeuse. Ils peuvent ainsi être facilement remplacés pour effectuer de nouveaux essais. Il faut également noter que l'on utilise une centrifugeuse classique, déjà disponible sur le marché. Les modules M sont configurés pour s'adapter à ce type de centrifugeuse déjà disponible.

De manière non limitative, le tri de gouttes a été expérimenté en utilisant le système de la figure 7, dans les conditions suivantes :

- Les gouttes sont formées à partir d'alginate (SLG100 de Novamatrix - Marque déposée).
- Le produit initial est composé de 250mg d'alginate lyophilisé conditionné dans un flacon stérile. Une solution mère à 4%SLG100 (m/m) est d'abord préparée (elle sera ensuite diluée pour obtenir des concentrations plus faibles).
- 5,94mL d'alginate buffer est ajouté. L'alginate buffer est composé de 150mM de NaCl et 25mM d'HEPES.
- La solution est agitée avec un barreau magnétique pendant 12 à 24 heures.
- Comme indiqué ci-dessus, les gouttes peuvent être expulsées dans l'air ou dans un liquide. Dans le deuxième cas, le liquide est un bain gélifiant.
- Dans le cas, où les gouttes sont expulsées dans l'air, un bain gélifiant est placé au fond du tube pour récupérer les gouttes. Il est par exemple composé de 80mM de NaCl, 100mM de CaCl2 et 25mM d'HEPES. Différents types de bain sont bien entendu envisageables pour par exemple gélifier une partie des gouttes et non gélifier une autre partie.
- 20μl de solution d'alginate 2% est chargé dans le microréservoir connecté au capillaire 100. Le système est ensuite chargé dans la centrifugeuse. Les gouttes d'alginate formées par force centrifuge tombent dans les réservoirs où elles gélifient rapidement.
- Vitesse de rotation de la centrifugeuse à 2250 tours/min, diamètre du capillaire 100 de 75μm, temps de rotation 3min, distance (hauteur) entre paroi de séparation (position du réservoir dans le tube) et sortie du capillaire de 7mm.

L'analyse des résultats de formation et de tri se fait en observant les gouttes collectées dans le tube 201 et dans le réservoir 202. Les gouttes étant plus denses que la solution, elles sédimentent au fond du tube.

De manière générale, on constate que la position et la forme de la paroi 20 de séparation sont essentielles pour obtenir un tri précis. Par ailleurs, les expériences menées montrent la pertinence des simulations de trajectoires réalisées.

Comme indiqué ci-dessus, on a aussi constaté que le fluide utilisé dans lequel sont expulsées les gouttes jouait un rôle dans les forces mises en jeu.

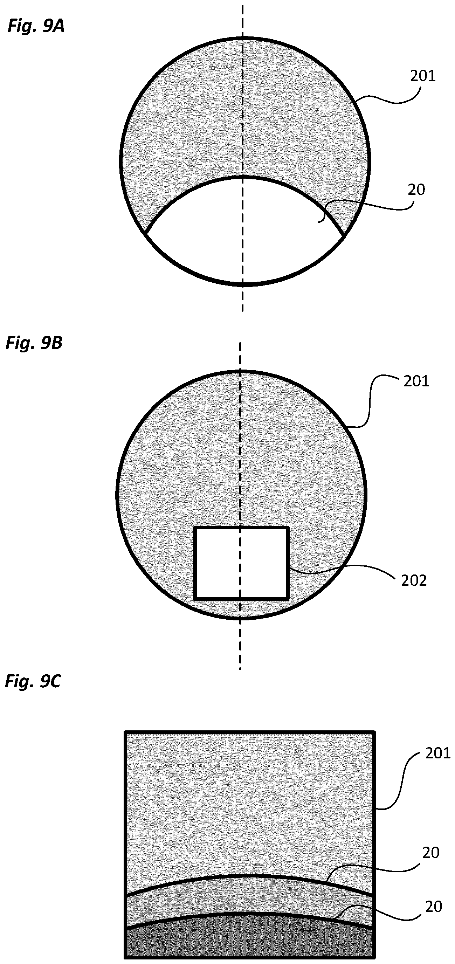

En référence aux figures 9A à 9C, il est possible d'optimiser le système, notamment en adaptant la forme de chaque paroi 20 de séparation employée en vue de maximiser le rendement du système. Plusieurs solutions sont envisageables. La figure 9A montre une solution dans laquelle la paroi de séparation 20 insérée dans le tube présente une section en arc de cercle, formant un compartiment avec la paroi du tube 201. La figure 9B montre une solution avec un réservoir 202 à section rectangulaire intégrée dans un tube 201 cylindrique. La figure 9C montre une solution dans laquelle le tube 201 est à section rectangulaire et inclut plusieurs parois de séparation 20 à section courbée en vue de former plusieurs compartiments. Bien entendu, d'autres solutions pourraient être envisagées.

**Revendications**

1. Module (M) destiné à être employé dans un système de tri par taille, de particules, **caractérisé en ce qu'**il se présente sous la forme d'un élément monobloc portant :

   - Une unité de production (U1) comportant un réservoir de liquide et une buse d'expulsion (10) montée sur ledit réservoir, par laquelle des particules peuvent être expulsées par centrifugation,
   - Une unité de collecte et de séparation (U2) positionnée en vis-à-vis de ladite buse d'expulsion (10), ladite unité de collecte et de séparation (U2) comprenant au moins une paroi de séparation (20) agencée pour former au moins deux compartiments (21) distincts, destinés à collecter des particules d'au moins une première taille dans un premier compartiment et des particules d'une deuxième taille dans un deuxième compartiment.
   - L'unité de production (U1) et l'unité de collecte et de séparation (U2) étant agencés fixes l'une par rapport à l'autre.

2. Module selon la revendication 1, **caractérisé en ce qu'**il comporte des moyens de réglage d'une position de ladite au moins une paroi de séparation (20) de ladite unité de collecte et de séparation (U2), pour laquelle lesdites particules de la première taille sont séparées des particules de la deuxième taille.

3. Module selon la revendication 2, **caractérisé en ce que** les moyens de réglage sont actionnés manuellement ou de manière automatique par commande en provenance d'une unité de traitement et de commande (UC), en tenant compte d'une position calculée.

4. Module selon la revendication 2 ou 3 **caractérisé en ce que** les moyens de réglage comportent des moyens de déplacement de ladite au moins une paroi de séparation (20) de ladite unité de collecte et de séparation (U2) dans au moins deux directions appartenant à un plan, dit plan de réglage, qui est perpendiculaire audit premier axe.

5. Module selon la revendication 4, **caractérisé en ce que** l'unité de collecte et de séparation (U2) comporte au moins un tube (201) de réception.

6. Module selon la revendication 5, **caractérisé en ce que** le tube (201) de réception est rempli d'un liquide.

7. Module selon la revendication 5 ou 6, **caractérisé en ce que** ledit tube (201) de réception comporte ladite au moins une paroi de séparation (20) dont la position est réglée à l'aide desdits moyens de réglage.

8. Module selon l'une des revendications 5 à 7, **caractérisé en ce que** le tube (201) de réception est cylindrique.

9. Module selon la revendication 7 ou 8, **caractérisé en ce que** ladite au moins une paroi de séparation est celle d'un réservoir (202) inséré dans ledit tube (201).

10. Module selon l'une des revendications 5 à 9, **caractérisé en ce que** le tube (201) de réception intègre plusieurs parois de séparation (20) afin de former au moins trois compartiments de tri.

11. Module selon l'une des revendications 1 à 10, **caractérisé en ce que** la buse d'expulsion (10) est formée à la sortie d'un capillaire (100) relié audit réservoir.

12. Système de tri par taille, de particules expulsées par centrifugation au sein d'un fluide, ledit système étant **caractérisé en ce qu'**il comporte :

    - Une centrifugeuse,
    - Au moins un module (M) monté sur la centrifugeuse et actionnable en rotation autour d'un premier axe par ladite centrifugeuse, ledit module étant tel que défini dans l'une des revendications 1 à 11.

13. Procédé de configuration destiné à être appliqué à un système de tri de particules expulsées par centrifugation au sein d'un fluide depuis une buse d'expulsion dudit système, ledit système étant tel que défini dans la revendication 12, ledit procédé étant **caractérisé en ce qu'**il consiste à :

    - Déterminer pour plusieurs tailles distinctes de particules (P) destinées à être expulsées, une trajectoire théorique depuis la buse d'expulsion (10) à partir d'une équation de mouvement de la particule, cette équation de mouvement tenant compte au moins de la force centrifuge, de la force de Coriolis et de la force de trainée venant s'appliquer sur chaque particule après expulsion par centrifugation,
    - Positionner au moins une paroi de séparation (20) d'une unité de collecte et de séparation (U2) en vis-à-vis de ladite buse d'expulsion (10), ladite au moins une paroi de séparation (20) étant agencée pour former au moins deux compartiments (21) distincts et positionnée en tenant compte des trajectoires des particules expulsées déterminées, pour collecter des particules d'au moins une première taille dans un premier compartiment et des particules d'une deuxième taille dans un deuxième compartiment.

**Patentansprüche**

1. Modul (M), das dazu bestimmt ist, in einem System zur Größensortierung von Partikeln eingesetzt zu werden, **dadurch gekennzeichnet, dass** es in Form eines einstückigen Teils vorliegt, das trägt:

    - eine Produktionseinheit (U1), die einen Flüssigkeitsbehälter und eine an dem Behälter angebrachte Ausstoßdüse (10) umfasst, durch die Partikel durch Zentrifugation ausgestoßen werden können,
    - eine Sammel- und Trenneinheit (U2), die gegenüber der Ausstoßdüse (10) positioniert ist, wobei die Sammel- und Trenneinheit (U2) mindestens eine Trennwand (20) aufweist, die so angeordnet ist, dass sie mindestens zwei verschiedene Kammern (21) bildet, die dazu bestimmt sind, Partikel mindestens einer ersten Größe in einer ersten Kammer und Partikel einer zweiten Größe in einer zweiten Kammer zu sammeln,
    - wobei die Produktionseinheit (U1) und die Sammel- und Trenneinheit (U2) feststehend zueinander angeordnet sind.

2. Modul nach Anspruch 1, **dadurch gekennzeichnet, dass** es Mittel zum Einstellen einer Position der mindestens einen Trennwand (20) der Sammel- und Trenneinheit (U2) umfasst, bei der die Partikel der ersten Größe von den Partikeln der zweiten Größe getrennt werden.

3. Modul nach Anspruch 2, **dadurch gekennzeichnet, dass** die Mittel zum Einstellen manuell oder automatisch durch Steuerung durch eine Verarbeitungs- und Steuerungseinheit (UC), unter Berücksichtigung einer berechneten Position, betätigt werden.

4. Modul nach Anspruch 2 oder 3, **dadurch gekennzeichnet, dass** die Mittel zum Einstellen Mittel zum Verlagern der mindestens einen Trennwand (20) der Sammel-und Trenneinheit (U2) in mindestens zwei Richtungen umfassen, die zu einer Ebene, Einstellebene genannt, gehören, die senkrecht zu der ersten Achse verläuft.

5. Modul nach Anspruch 4, **dadurch gekennzeichnet, dass** die Sammel- und Trenneinheit (U2) mindestens ein Aufnahmerohr (201) umfasst.

6. Modul nach Anspruch 5, **dadurch gekennzeichnet, dass** das Aufnahmerohr (201) mit einer Flüssigkeit gefüllt ist.

7. Modul nach Anspruch 5 oder 6, **dadurch gekennzeichnet, dass** das Aufnahmerohr (201) die mindestens eine Trennwand (20) umfasst, deren Position mithilfe der Mittel zum Einstellen eingestellt wird.

8. Modul nach einem der Ansprüche 5 bis 7, **dadurch gekennzeichnet, dass** das Aufnahmerohr (201) zylindrisch ist.

9. Modul nach Anspruch 7 oder 8, **dadurch gekennzeichnet, dass** die mindestens eine Trennwand diejenige eines in das Rohr (201) eingesetzten Behälters (202) ist.

10. Modul nach einem der Ansprüche 5 bis 9, **dadurch gekennzeichnet, dass** das Aufnahmerohr (201) mehrere Trennwände (20) beinhaltet, um mindestens drei Sortierkammern zu bilden.

11. Modul nach einem der Ansprüche 1 bis 10, **dadurch gekennzeichnet, dass** die Ausstoßdüse (10) an dem Auslass einer mit dem Behälter verbundenen Kapillare (100) gebildet ist.

12. System zur Größensortierung von Partikeln, die durch Zentrifugation in eine Flüssigkeit ausgestoßen werden, wobei das System **dadurch gekennzeichnet ist, dass** es umfasst:

    - eine Zentrifuge,
    - mindestens ein Modul (M), das an der Zentrifuge angebracht ist und von der Zentrifuge um eine erste Achse herum drehbetätigbar ist, wobei das Modul wie in einem der Ansprüche 1 bis 11 definiert ist.

13. Konfigurationsverfahren, das dazu bestimmt ist, bei einem System zur Sortierung von Partikeln angewandt zu werden, die durch Zentrifugation von einer Ausstoßdüse des Systems aus in eine Flüssigkeit ausgestoßen werden, wobei das System wie in Anspruch 12 definiert ist, wobei das Verfahren **dadurch gekennzeichnet ist, dass** es in Folgendem besteht:

- Ermitteln, für mehrere verschiedene Größen von Partikeln (P), die dazu bestimmt sind, ausgestoßen zu werden, einer theoretischen Trajektorie von der Ausstoßdüse (10) aus anhand einer Bewegungsgleichung des Partikels, wobei diese Bewegungsgleichung mindestens die Zentrifugalkraft, die Corioliskraft und die Widerstandskraft berücksichtigt, die auf jeden Partikel nach dem Ausstoßen durch Zentrifugation angewandt werden,
- Positionieren mindestens einer Trennwand (20) einer Sammel- und Trenneinheit (U2) gegenüber der Ausstoßdüse (10), wobei die mindestens eine Trennwand (20) so angeordnet ist, dass sie mindestens zwei verschiedene Kammern (21) bildet, und unter Berücksichtigung der ermittelten Trajektorien der ausgestoßenen Partikel positioniert ist, um Partikel mindestens einer ersten Größe in einer ersten Kammer und Partikel einer zweiten Größe in einer zweiten Kammer zu sammeln.

## Claims

1. Module (M) intended to be used in a system for sorting particles by size, **characterized in that** it is in the form of a one-piece element bearing:

    - a production unit (U1) having a liquid reservoir and an expulsion nozzle (10) mounted on said reservoir, via which particles may be expelled by centrifugation,
    - a collection and separation unit (U2) positioned opposite said expulsion nozzle (10), said collection and separation unit (U2) comprising at least one separation wall (20) arranged to form at least two separate compartments (21), which are intended to collect particles of at least a first size in a first compartment and particles of a second size in a second compartment,
    - the production unit (U1) and the collection and separation unit (U2) being arranged fixedly with respect to one another.

2. Module according to Claim 1, **characterized in that** it has means for adjusting a position of said at least one separation wall (20) of said collection and separation unit (U2), for which said particles of the first size are separated from the particles of the second size.

3. Module according to Claim 2, **characterized in that** the adjustment means are actuated manually or automatically by command coming from a processing and control unit (UC), taking account of a calculated position.

**4.** Module according to Claim 2 or 3, **characterized in that** the adjustment means have means for moving said at least one separation wall (20) of said collection and separation unit (U2) in at least two directions belonging to a plane, referred to as adjustment plane, which is perpendicular to said first axis.

**5.** Module according to Claim 4, **characterized in that** the collection and separation unit (U2) has at least one receiving tube (201).

**6.** Module according to Claim 5, **characterized in that** the receiving tube (201) is filled with a liquid.

**7.** Module according to Claim 5 or 6, **characterized in that** said receiving tube (201) has said at least one separation wall (20) of which the position is adjusted using said adjustment means.

**8.** Module according to one of Claims 5 to 7, **characterized in that** the receiving tube (201) is cylindrical.

**9.** Module according to Claim 7 or 8, **characterized in that** said at least one separation wall is that of a reservoir (202) inserted into said tube (201).

**10.** Module according to one of Claims 5 to 9, **characterized in that** the receiving tube (201) incorporates a plurality of separation walls (20) in order to form at least three sorting compartments.

**11.** Module according to one of Claims 1 to 10, **characterized in that** the expulsion nozzle (10) is formed at the outlet of a capillary (100) connected to said reservoir.

**12.** System for sorting particles expelled by centrifugation into a fluid by size, said system being **characterized in that** it has:

- a centrifuge,
- at least one module (M) mounted on the centrifuge and able to be actuated in rotation about a first axis by said centrifuge, said module being as defined in one of Claims 1 to 11.

**13.** Configuration method intended to be applied to a system for sorting particles expelled by centrifugation into a fluid from an expulsion nozzle of said system, said system being as defined in Claim 12, said method being **characterized in that** it consists in:

- determining, for a plurality of distinct sizes of particles (P) intended to be expelled, a theoretical trajectory from the expulsion nozzle (10) using an equation of movement of the particle, this movement equation taking account at least of the centrifugal force, the Coriolis force and the drag force applied to each particle after expulsion by centrifugation,
- positioning at least one separation wall (20) of a collection and separation unit (U2) opposite said expulsion nozzle (10), said at least one separation wall (20) being arranged to form at least two separate compartments (21) and positioned taking account of the determined trajectories of the expelled particles, so as to collect particles of at least a first size in a first compartment and particles of a second size in a second compartment.

*Fig. 1*

**Fig. 2**

**Fig. 3**

**Fig. 4**

**Fig. 5**

*Fig. 6*

**Fig. 7**

P_in

UC

d1      d2

E1

E2

M

A

d1   1

11

d2

G  100

A

201    202

(A)

x

y

**Fig. 8**

A-A

201

202

**Fig. 9A**

**Fig. 9B**

**Fig. 9C**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012302420 A1
- US 2009286300 A1
- WO 2004037374 A1
- US 2007059781 A
- US 2007026381 A1
- JP 2007021465 A
- WO 2006102258 A1
- US 2005133480 A1
- FR 2501061 A1